# EUROPÄISCHE PATENTANMELDUNG

(11) **EP 1 458 146 A1**
(43) Veröffentlichungstag der Anmeldung: **15.09.2004**
(21) Anmeldenummer: 03005547.9
(22) Anmeldetag: 11.03.2003
(51) Int. Cl.: H04L 12/56

(54) **Verfahren und netzseitige Einrichtung zur Ermittlung eines Pfades in einem adhoc Funkkommunikationssystem**

(71) Anmelder: SIEMENS AKTIENGESELLSCHAFT, 80333 München (DE)
(72) Erfinder: Li, Hui, Dr., 80937 München (DE); Schulz, Egon, Dr., 80993 München (DE); Stortz, Gerhard, 85586 Poing (DE); Yu, Dan, 81925 München (DE)

(57) **Zusammenfassung**

Die Erfindung betrifft ein Verfahren zur Ermittlung eines Pfades in einem adhoc Funkkommunikationssystem mit einer Vielzahl von zumindest teilweise mobilen Funkstationen (BSA,BSB,BSC,A1,A2,A3,A4,A5,B1,B2,B3,C1,C2,C3,C4,C5), wobei eine Funkstation, welche sich in einem Funkabdeckungsbereich einer anderen Funkstation befindet, eine benachbarte Funkstation zu der anderen Funkstation darstellt, und wobei ein Pfad zwischen der ersten (A1) und der zweiten (C1) Funkstation aus einer Reihenfolge von Funkstationen (A1,A5,B2,B3,C2,C5,C1) besteht, welche außer der ersten Funkstation (A1) und der zweiten Funkstation (C1) gegebenfalls die in der Reihenfolge dazwischenliegenden die Informationen empfangenden und weiterleitenden Funkstationen (A5,B2,B3,C2,C5) beinhaltet. Erfindungsgemäß sendet zur Ermittlung von mindestens einem Pfad zwischen der ersten (A1) und der zweiten (C1) Funkstation sowohl die erste (A1) als auch die zweite (C1) Funkstation jeweils an ihre benachbarte oder benachbarten Funkstationen (A5,C5) eine Nachricht mit Identifikationsinformation von der jeweils anderen Funkstation (A1,C1). Weiterhin betrifft die Erfindung eine netzseitige Einrichtung (NE) zur Durchführung des Verfahrens.

## Beschreibung

Die Erfindung betrifft ein Verfahren zur Ermittlung eines Pfades in einem Funkkommunikationssystem mit einer Vielzahl von zumindest teilweise mobilen Funkstationen nach dem Oberbegriff des Anspruchs 1.

Weiterhin betrifft die Erfindung eine netzseitige Einrichtung in einem Funkkommunikationssystem mit einer Vielzahl von zumindest teilweise mobilen Funkstationen nach dem Oberbegriff des Anspruchs 7.

In Funkkommunikationssystemen werden Informationen (beispielsweise Steuersignale oder Nutzdaten wie Sprache, Bilder, Kurznachrichten oder andere Daten) mittels elektromagnetischer Wellen über eine Funkschnittstelle zwischen Sende- und Empfangsfunkstation übertragen.

Funkkommunikationssysteme sind oftmals als zellulare Systeme z.B. nach dem Standard GSM (Global System for Mobile Communication) oder UMTS (Universal Telecommunications System) mit einer Netzinfrastruktur bestehend aus Basisstationen, Einrichtungen zur Kontrolle und Steuerung der Basisstationen und weiteren netzseitigen Einrichtungen ausgebildet.

In einem Adhoc-Modus eines Funkkommunikationssystems (in diesem Fall auch selbstorganisierendes Netz genannt) sind Funkstationen in der Lage, ohne eine vermittelnde zentrale Einrichtung eine Funkverbindung untereinander aufzubauen. Die Verbindung zwischen zwei Funkstationen erfolgt dabei entweder direkt oder bei größeren Entfernungen über weitere Funkstationen, die für diese Verbindung Relaisstationen bilden. Nutzinformationen werden somit von Funkstation zu Funkstation über Abstände gesendet, welche der Funkreichweite der Funkstationen entsprechen. Die Funkstationen eines selbstorganisierenden Netzes können mobile Funkstationen (beispielsweise Mobilfunkgeräte von Personen oder in Verkehrsfahrzeugen) und/oder vorwiegend stationäre Funkstationen (beispielsweise Computer, Drucker, Haushaltsgeräte) sein. Beispiele für selbstorganisierende Netze sind funkgestützte lokale Netze (WLAN, Wireless Local Area Network) wie HiperLAN oder IEEE 802.11.

Ein besonderer Vorteil von Adhoc Netzen liegt in ihrer großen Mobilität und Flexibilität. Diese Faktoren stellen jedoch auch eine große Herausforderung für Routing Verfahren dar. In einem aus mehreren Funkstationen bestehenden Funkkommunikationssystem muss zur Übermittlung von Informationen von einem Sender zu einem Empfänger ein Pfad von dem Sender gegebenenfalls über mehrere das Datenpaket weiterleitende Funkstationen zu dem Empfänger ermittelt werden. Diese Ermittlung bedarf der Übertragung einer Vielzahl von Signalisierungsinformation, so dass unter Umständen der Bedarf an Funkressourcen zur Ermittlung eines Pfades unerwünscht, groß ist. Die Auswahl eines Pfades durch ein Funkkommunikationssystem bezeichnet man als Routing. Handelt es sich bei den Funkstationen um mobile Funkstationen, so ändert sich in der Regel die Topologie des Netzwerkes mit der Zeit.

Der Erfindung liegt die Aufgabe zugrunde, ein Verfahren und eine netzseitige Einrichtung der eingangs genannten Art aufzuzeigen, welche eine ressourcensparende Ermittlung eines Pfades in einem Funkkommunikationssystem mit einer Vielzahl von zumindest teilweise mobilen Funkstationen erlauben.

Diese Aufgabe wird hinsichtlich des Verfahrens gelöst durch ein Verfahren mit den Merkmalen des Anspruchs 1.

Vorteilhafte Ausgestaltungen und Weiterbildungen sind Gegenstand von abhängigen Ansprüchen.

Das Funkkommunikationssystem umfasst eine Vielzahl von zumindest teilweise mobilen Funkstationen. Eine Funkstation, welche sich in einem Funkabdeckungsbereich einer anderen Funkstation befindet, wird als benachbarte Funkstation zu der anderen Funkstation bezeichnet. In dem Funkkommunikationssystem sind Informationen von einer ersten Funkstation als Sendefunkstation zu einer zweiten Funkstation als Empfangsfunkstation direkt oder über eine oder mehrere andere die Informationen empfangende und weiterleitende Funkstationen über mindestens einen Pfad übertragbar. Hierbei besteht ein Pfad zwischen der ersten und der zweiten Funkstation aus einer Reihenfolge von Funkstationen, welche außer der ersten Funkstation und der zweiten Funkstation gegebenenfalls die in der Reihenfolge dazwischenliegenden die Informationen empfangenden und weiterleitenden Funkstationen beinhaltet.

Erfindungsgemäß sendet zur Ermittlung von mindestens einem Pfad zwischen der ersten und der zweiten Funkstation sowohl die erste als auch die zweite Funkstation jeweils an ihre benachbarte oder benachbarten Funkstationen eine Nachricht mit Identifikationsinformationen von der jeweils anderen Funkstation.

Das Funkkommunikationssystem kann sowohl mobile als auch stationäre Funkstationen enthalten. Beispiele für mobile Funkstationen sind Mobilstationen oder Laptops, Beispiele für stationäre Funkstationen sind Basisstationen, Funkzugangspunkte oder stationäre Computer mit Funkanschluss. Diese Funkstationen können miteinander kommunizieren. Es ist möglich, dass Funksstationen zur Kommunikation mit anderen Funkstationen verschiedenartige Funkschnittstellen mit unterschiedlichen Funkabdeckungsbereichen aufweisen. So kann eine Mobilstation zum Beispiel zur Kommunikation mit einer Basisstation einen anderen Funkabdeckungsbereich aufweisen als zur Kommunikation mit einer anderen Mobilstation. Eine Funkstation ist dann benachbart zu einer anderen Funkstation, wenn sie sich aktuell in einem Funkabdeckungsbereich dieser anderen Funkstation befindet. Relevant für die Überprüfung, ob zwei Funkstationen benachbarte Funkstationen darstellen, ist der Funkabdeckungsbereich, der sich auf die Kommunikation zwischen diesen beiden Funkstationen bezieht. Eine Mobilstation ist z.B. dann benachbart zu einer anderen Mobilstation, wenn sie sich aktuell innerhalb eines zur Kommunikation mit Mobilstationen eingesetzten Funkabdeckungsbereichs der anderen Mobilstation befindet. Eine Funkstation innerhalb des betrachteten Funkkommunikationssystems kann eine beliebige Anzahl von benachbarten Funkstationen aufweisen.

In dem Funkkommunikationssystem sind Informationen von einer ersten Funkstation zu einer zweiten Funkstation übertragbar. Sind diese beiden Funkstationen benachbarte Funkstationen, so kann die Übertragung von Informationen direkt stattfinden. Sind die beiden Funkstationen jedoch nicht benachbart, so ist die Weiterleitung der Informationen durch andere Funkstationen nötig. Die Informationen können dann von einer oder mehreren anderen Funkstationen empfangen und weitergeleitet werden. Hierzu tragen die Informationen eine Identifikationsinformation der zweiten Funkstation. Die Weiterleitung erfolgt gemäß obiger Erklärung jeweils über benachbarte Funkstationen. Eine Weiterleitung ist sowohl ausschließlich über gleichartige Funkstationen, wie zum Beispiel gleichartige Mobilstationen, möglich, als auch über verschiedenartige Funkstationen, wie zum Beispiel Mobilstationen und Basisstationen.

Die Informationen werden in dem Funkkommunikationssystem über einen Pfad übertragen. Dieser Pfad besteht an erster Stelle aus der ersten, die Informationen zuerst ausstrahlenden Funkstation, dann aus der oder den die Informationen weiterleitenden Funkstation, sowie an letzter Stelle aus der zweiten, die Informationen letztendlich empfangenden Funkstation.

Zur Ermittlung eines Pfades sendet die erste und die zweite Funkstation eine Nachricht aus. Diese Nachricht wird insbesondere jeweils per Rundsenderuf (Broadcast) an alle Nachbarn der diese Nachricht aussendenden Funkstationen gesendet. Um einen Pfad durch das Funkkommunikationssystem ermitteln zu können, trägt die ausgesendete Nachricht eine Identifikationsinformation der jeweils anderen Funkstation. Die von der ersten Funkstation ausgesendete Nachricht zur Ermittlung von mindestens einem Pfad trägt somit eine Identifikationsinformation von der zweiten Funkstation, und die von der zweiten Funkstation ausgesendeten Nachricht trägt eine Identifikationsinformation der ersten Funkstation. Vorteilhafter Weise erfolgt die Versendung dieser beiden Nachrichten durch die erste und durch die zweite Funkstation in etwa gleichzeitig. Die Nachrichten werden von der ersten und der zweiten Funkstation ausgestrahlt, ohne dass sie unmittelbar zuvor von einer benachbarten Funkstation eine ähnliche Nachricht zur Ermittlung eines Pfades zwischen der ersten und der zweiten Funkstation erhalten haben, die Nachrichten bestehen insofern nicht aus einer Weiterleitung von Nachrichten zur Ermittlung eines Pfades. Insbesondere hat keine der beiden Funkstationen die Nachricht der jeweils anderen Funkstation empfangen, bevor sie ihre eigene Nachricht sendet. Somit stoßen beide Nachrichten an verschiedenen Orten des Funkkommunikationssystems ein Verfahren zur Ermittlung desselben Pfades oder derselben Pfade durch das Funkkommunikationssystem an. Aufgrund der Ausstrahlung der Nachricht zur Ermittlung eines Pfades durch die erste und durch die zweite Funkstation handelt es sich um ein bidirektionales Vorgehen zur Pfadermittlung.

In Weiterbildung der Erfindung werden die erste und die zweite Funkstation zur Versendung der jeweiligen Nachricht von einer netzseitigen Einrichtung des Funkkommunikationssystems aufgefordert. Diese Aufforderung kann über eine Funkstation erfolgen. Insbesondere kann die Aufforderung die Identifikationsinformation der jeweils anderen Funkstation enthalten. Eine derartige Aufforderung erlaubt eine Mischung aus einer zentralen, von einer netzseitigen Einrichtung gesteuerten, und einer dezentralen, von einzelnen Funkstationen durchgeführten, Ermittlung von mindestens einem Pfad zwischen der ersten und der zweiten Funkstation.

Vorzugsweise informiert die erste Funkstation vor der Aufforderung die netzseitige Einrichtung über eine zukünftige Übermittlung von Informationen von der ersten zu der zweiten Funkstation. Die erste Funkstation kann auch vor der Aufforderung Informationen über mindestens einen Pfad zwischen der ersten und der zweiten Funkstation von der netzseitigen Einrichtung anfordern.

In einer Ausgestaltung der Erfindung leiten die benachbarte oder die benachbarten Funkstationen, welche die jeweilige Nachricht empfangen haben, an ihre jeweilige benachbarte oder benachbarten Funkstationen die jeweilige Nachricht nach Hinzufügen von Identifikationsinformationen weiter. Eine Funkstation, welche eine Nachricht zur Ermittlung von mindestens einem Pfad zwischen der ersten und der zweiten Funkstation empfangen hat, kann somit eine ihr eigene Identifikationsinformation zu dieser Nachricht hinzufügen. Nach dem Hinzufügen dieser Identifikationsinformation leitet die entsprechende Funkstation die derart modifizierte Nachricht weiter. Dieses Verfahren kann für die Funkstation bzw. die Funkstationen, welche im folgenden die modifizierte Nachricht empfangen, entsprechend angewendet werden. Auf diese Weise entsteht eine Nachricht, welche eine Reihe von Identifikationsinformationen umfasst. Diese Reihe von Identifikationsinformationen entspricht dann einem Pfad durch das Funkkommunikationssystem.

Mit Vorteil überträgt eine Funkstation, welche
- sowohl eine Nachricht gegebenenfalls mit von einer oder mehreren Funkstationen hinzugefügten Identifikationsinformationen von der ersten Funkstation
- als auch eine Nachricht gegebenenfalls mit von einer oder mehreren Funkstationen hinzugefügten Identifikationsinformationen von der zweiten Funkstation empfangen hat, Informationen über einen Pfad zwischen der ersten und der zweiten Funkstation an die erste und/oder die zweite Funkstation gegebenenfalls über eine oder mehrere weitere Funkstationen unter Verwendung der Informationen über den Pfad. Die mindestens eine Funkstation hat also zwei zusammengehörige Nachrichten von der ersten und der zweiten Funkstation, gegebenenfalls über andere Funkstationen, erhalten, welche zur Ermittlung eines Pfades zwischen der ersten und der zweiten Funkstation dienen. Dass die beiden Nachrichten zusammengehören, kann die mindestens eine Funkstation an einer Identifikationsinformation der Nachrichten und/oder an der Tatsache, dass beide Nachrichten zur Ermittlung eines Pfades zwischen der ersten und der zweiten Funkstation dienen, erkennen. Da diese Nachrichten die Identifikationsinformationen der die Nachrichten weiterleitenden Funkstationen umfassen, ist der mindestens einen Funkstation ein Pfad durch das Funkkommunikationssystem bekannt. Informationen über diesen Pfad kann diese mindestens eine Funkstation dann an die erste und/oder an die zweite Funkstation übertragen. Für diese Übertragung kann die mindestens eine Funkstation ihre Kenntnis des Pfades verwenden. Somit werden die Informationen über den Pfad zwischen der ersten und der zweiten Funkstation auf einem oder mehreren Teilen des Pfades zwischen der ersten und der zweiten Funkstation übertragen. Auf diese Weise können die erste und/oder die zweite Funkstation Kenntnis über den derart ermittelten Pfad zwischen der ersten und der zweiten Funkstation erlangen. Dieser Pfad kann dann zur Versendung von Informationen von der ersten zu der zweiten Funkstation versendet werden. Hierzu kann der Pfad in ein Kopfteil der zu übertragenden Information eingefügt werden.

Einer Ausgestaltung der Erfindung gemäß stellt der zu ermittelnde mindestens eine Pfad zwischen der ersten und der zweiten Funkstation
- einen Teil eines Gesamtpfades zwischen der ersten Funkstation als Sendefunkstation und einer anderen als der zweiten Funkstation als Empfangsfunkstation dar, oder
- einen Teil eines Gesamtpfades zwischen einer anderen als der ersten Funkstation als Sendefunkstation und der zweiten Funkstation als Empfangsfunkstation dar, oder
- einen Teil eines Gesamtpfades zwischen einer anderen als der ersten und der zweiten Funkstation und einer weiteren anderen als der ersten und der zweiten Funkstation dar.

Somit kann das erfindungsgemäße Verfahren von mehreren Paaren von Funkstationen gleichzeitig eingesetzt werden, und somit ein Gesamtpfad, welcher sich aus mehreren Einzelpfaden zusammensetzt, ermittelt werden. Dieses Vorgehen entspricht einem multidirektionalen Verfahren zur Ermittlung eines Pfades, da das Verfahren in diesem Fall von mehr als zwei Orten des Funkkommunikationssystems in etwa gleichzeitig angestoßen werden kann.

Die oben genannte Aufgabe wird hinsichtlich der netzseitigen Einrichtung in einem Funkkommunikationssystem durch eine netzseitige Einrichtung mit den Merkmalen des Anspruchs 7 gelöst.

Eine Ausgestaltung ist Gegenstand eines abhängigen Anspruchs.

Erfindungsgemäß weist die netzseitige Einrichtung Mittel zum Auswählen von mindestens zwei Funkstationen aus mindestens einem Pfad zwischen der ersten und der zweiten Funkstation auf, welche zur Versendung von jeweils einer Nachricht zur Ermittlung des mindestens einen Pfades aufgefordert werden.

Die Aufforderung an die mindestens zwei Funkstationen kann direkt von der erfindungsgemäßen netzseitigen Einrichtung durchgeführt werden, oder aber auch auf Anforderung der netzseitigen Einrichtung durch andere Funkstationen. Der zu ermittelnde Pfad ist der netzseitigen Einrichtung bei der Auswahl der mindestens zwei Funkstationen nicht bekannt. Vielmehr legt die netzseitige Einrichtung durch die Auswahl von mindestens zwei Funkstationen Punkte des zu ermittelnden Pfades in Form der ausgewählten Funkstation fest. Diese Auswahl der mindestens zwei Funkstationen kann anhand verschiedener Kriterien erfolgen. Beispiele für Kriterien sind eine Ortsabhängigkeit der ausgewählten Funkstationen, so zum Beispiel können bevorzugt Funkstationen in der Mitte oder am Rand eines geografischen Bereiches oder einer Funkzelle, oder auch aus jeder Funkzelle, durch welche der konkret zu ermittelnde Pfad verlaufen soll, mindestens eine Funkstation ausgesucht werden. Weitere Beispiele sind die Signalstärke von Funksignalen von Funkstationen oder auch ein Zufallsmechanismus zur Auswahl von Funkstationen.

Bei der netzseitigen Einrichtung kann es sich z.B. um eine Basisstation oder um eine mit einer oder mehreren Basisstationen verbundenen Einrichtung handeln.

In einer Ausgestaltung der Erfindung weist die netzseitige Einrichtung Mittel zum Speichern von Nachbarschaftsbeziehungen zwischen den Funkstationen des Funkkommunikationssystem auf. Hierbei kann es sich zum Beispiel um eine Tabelle handeln, in welcher für jede Funkstation des Funkkommunikationssystems die aktuellen Nachbarfunkstationen aufgelistet sind. Die erfindungsgemäße Netzeinrichtung eignet sich insbesondere zur Durchführung des erfindungsgemäßen Verfahrens. Weitere Vorrichtungen und Mittel zur Durchführung des erfindungsgemäßen Verfahrens können in der netzseitigen Einrichtung vorgesehen sein.

Im Folgenden wird die Erfindung anhand eines Ausführungsbeispieles näher erläutert. Dabei zeigen
- Figur 1:: einen Teil eines Funkkommunikationssystems,
- Figur 2:: ein erstes Ablaufdiagramm eines erfindungsgemäßen Verfahrens,
- Figur 3:: eine schematische Illustration eines Ablaufs eines erfindungsgemäßen Verfahrens in einem Funkkommunikationssystem,
- Figur 4:: ein zweites Ablaufdiagramm eines erfindungsgemäßen Verfahrens,
- Figur 5a:: eine erste bildliche Darstellung eines Vorteils des erfindungsgemäßen Verfahrens,
- Figur 5b:: eine zweite bildliche Darstellung eines Vorteils des erfindungsgemäßen Verfahrens.

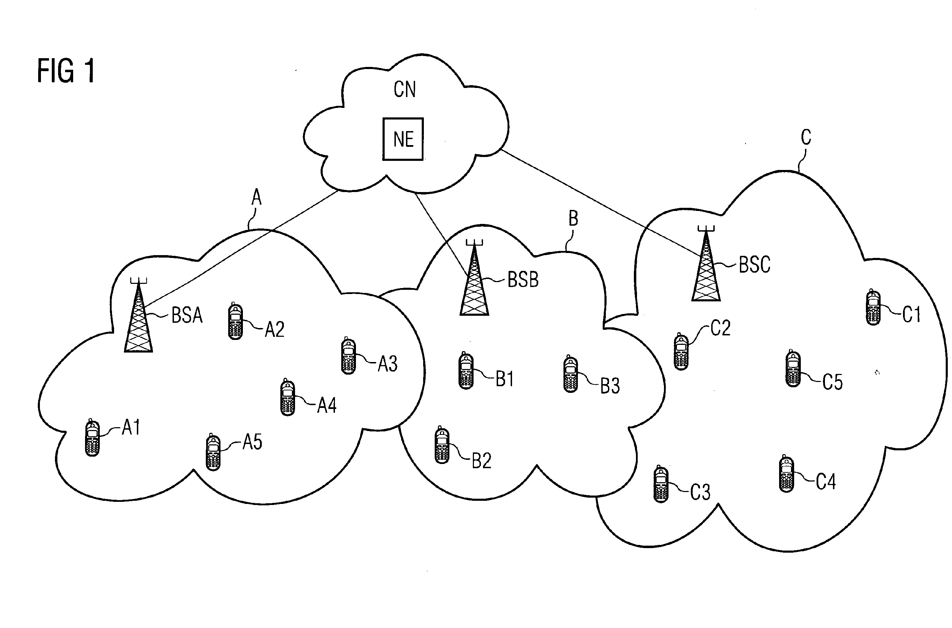

In Figur 1 ist ein Ausschnitt aus einem Funkkommunikationssystems dargestellt. Dieser umfasst drei Basisstationen BSA, BSB und BSC. Weiterhin sind in dem Funkkommunikationssystem die teilnehmerseitigen Funkstationen A1, A2, A3, A4, A5, B1, B2, B3, C1, C2, C3, C4 und C5 vorhanden. Die Funkstationen A1, A2, A3, A4 und A5 befinden sich in der Funkzelle A der Basisstation BSA. Dementsprechend halten sich die Funkstationen B1, B2 und B3 aktuell in der Funkzelle B der Basisstation BSB und die Funkstationen C1, C2, C3, C4 und C5 in der Funkzelle C der Basisstation BSC auf. Das Kernnetz CN enthält eine netzseitige Einrichtung NE und ist mit den Basisstationen BSA, BSB und BSC verbunden.

Im folgenden wird als Beispiel der Fall betrachtet, dass die Funkstation A1 Informationen an die Funkstation C1 versenden will. Bei dem betrachteten Funkkommunikationssystem handelt es sich um eine Mischung aus einem zellularen Funkkommunikationssystem und einem funkgestützten lokalen Netz (WLAN, Wireless Local Area Network). Dieser Mischungscharakter des betrachteten Funkkommunikationssystems äußert sich darin, dass einerseits zur Übermittlung von Daten zwischen den einzelnen Funkstationen diese Daten von Funkstation zu Funkstation weitergeleitet werden, und dass andererseits das Kernnetz bzw. die Basisstationen für bestimmte Funktionen benötigt werden.

Zur Übermittlung der Informationen von der Funkstation A1 zu der Funkstation C1 werden diese Informationen über einen Pfad von Funkstation zu Funkstation weitergeleitet. Eine Funkstation kann Informationen jeweils an eine andere Funkstation in ihrem Funkabdeckungsbereich weiterleiten. Bei Funkstationen, welche sich in ihren jeweiligen Funkabdeckungsbereichen aufhalten, handelt es sich um benachbarte Funkzellen.

Die Funkstationen A1, A2, A3, A4, A5, B1, B2, B3, C1, C2, C3, C4 und C5 weisen jeweils eine ähnliche erste Funkreichweite auf, welche deutlich kleiner als die Funkreichweite der Basisstationen BSA, BSB und BSC ist. Die Funkreichweite der Basisstationen BSA, BSB und BSC entspricht mindestens dem Radius der Funkzellen A, B und C. Neben der ersten Funkreichweite weisen die Funkstationen A1, A2, A3, A4, A5, B1, B2, B3, C1, C2, C3, C4 und C5 zusätzlich eine größere zweite Funkreichweite auf, aufgrund derer sie mit den Basisstationen BSA, BSB und BSC kommunizieren können. Somit stehen den Funkstationen A1, A2, A3, A4, A5, B1, B2, B3, C1, C2, C3, C4 und C5 zwei Funkreichweiten zur Verfügung, wobei die erste zur Kommunikation zwischen den Funkstationen A1, A2, A3, A4, A5, B1, B2, B3, C1, C2, C3, C4 und C5 verwendet wird, und die zweite zur Kommunikation mit den Basisstationen BSA, BSB und BSC.

Die Funkstation A1 beabsichtigt nun, Informationen über andere Funkstationen zur Funkstation C1 zu senden. Hierzu muss der Funkstation A1 ein Pfad durch das Funkkommunikationssystem bekannt sein. Ein Pfad könnte im betrachteten Beispiel zum Beispiel aus der folgenden Reihe von Funkstationen bestehen: A1, A2, A3, B1, B3, C2, C5 und C1. Die genannten Funkstationen A1, A2, A3, B1, B3, C2, C5 und C1 sind jeweils paarweise benachbart, so dass sie die Informationen empfangen und weiterleiten können. Damit die Informationen, welche die Funkstation A1 versendet, über den ihr bekannten Pfad an die Funkstation C1 weitervermittelt werden, sind Informationen über diesen Pfad in einem Kopfteil (Header) der Informationen enthalten. Eine die Informationen empfangende Funkstation erkennt an den Angaben über den Pfad, dass sie die Informationen den Pfad entlang weiterleiten soll. Dieses Vorgehen setzt sich solange fort, bis die Funkstation C1 anhand des Pfades oder an einer anderen Information über den Adressaten der Informationen erkennt, dass sie der letztendliche Empfänger der Informationen ist, welcher die Informationen auswertet und nicht weiterleitet.

Die Funkstation A1 kann zuerst in einem ihr angeschlossenen Speicher überprüfen, ob sie einen Pfad zu der Funkstation C1 kennt. Eine derartige Speicherung von Pfaden durch das Funkkommunikationssystem ist vor allem dann hilfreich, wenn das Funkkommunikationssystem eine Vielzahl von stationären, d.h. nicht mobilen, Funkstationen aufweist. Hierunter sind zum Beispiel Basisstationen zu verstehen, welche auch zur Weiterleitung der Informationen verwendet werden können. Weist das Funkkommunikationssystem hingegen eine Vielzahl von mobilen Funkstationen auf, dann verändern sich die Positionen dieser Funkstationen in der Regel mit der Zeit, so dass Pfade nach einer gewissen Zeit ihre Aktualität verlieren können. In diesem Fall kann auf die Verwendung von gespeicherten Pfadtabellen verzichtet werden, oder die Pfade der Tabellen werden nach einer zu bestimmenden Zeit automatisch gelöscht und somit nicht mehr ohne Überprüfung verwendet.

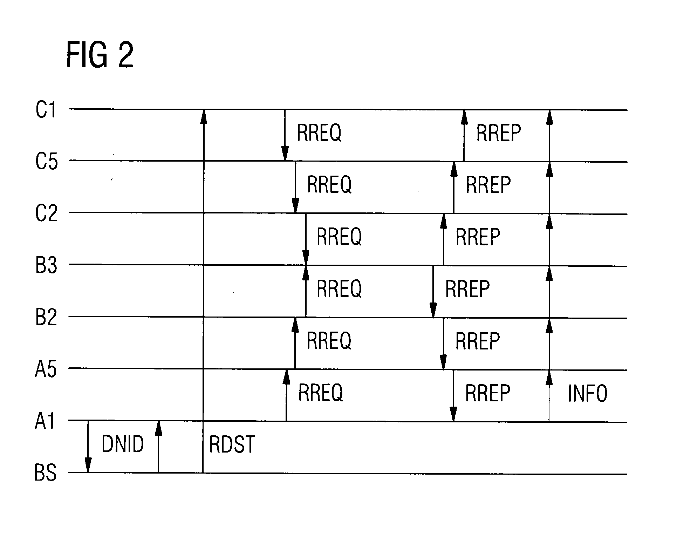

Im betrachteten Beispiel wird angenommen, dass die Funkstation A1 keinen Pfad zu der Funkstation C1 kennt. Figur 2 zeigt ein erfindungsgemäßes Verfahren zur Ermittlung eines geeigneten Pfades durch das Funkkommunikationssystem der Figur 1. Zu Beginn sendet die Funkstation A1 eine Nachricht DNID (Destination Node Identification) an die Basisstation BSA. Die Benachrichtigung DNID enthält eine Aufforderung an die Basisstation BSA bzw. das Kernnetz CN, zu überprüfen, ob die Funkstation C1 im Funkkommunikationssystem registriert ist. Diese Überprüfung kann im Kernnetz CN unter Verwendung von verschiedenen Tabellen oder Registern, wie z.B. einem HLR (Home Location Register) oder einem VLR (Visitor Location Register) stattfinden. Stellt das Kernnetz CN fest, dass die gewünschte Funkstation C1 aktuell nicht im Funkkommunikationssystem als Empfänger von Informationen verfügbar ist, so sendet die Basisstation BSA der Funkstation A1 eine entsprechende Fehlermeldung. Im betrachteten Beispiel wird durch das Kernnetz CN ermittelt, dass sich die Funkstation C1 in der Funkzelle C der Basisstation BSC aufhält.

Die Basisstation BSA sendet daraufhin an die Funkstation A1 eine Nachricht RDST (Route Discovery Start), womit die Funkstation A1 aufgefordert wird, durch das Aussenden einer geeigneten Broadcast Nachricht das Verfahren zur Ermittlung des Pfades zur Funkstation C1 zu initiieren. Eine entsprechende Nachricht RDST sendet auch die Basisstation BSC an die Funkstation C1. Durch diese Nachricht RDST wird die Funkstation C1 aufgefordert, durch das Aussenden einer Broadcast Nachricht ebenso das verfahren zur Ermittlung, eines geeigneten Pfades zwischen der Funkstation C1 und Funkstation A1 anzustoßen. Während der Funkstation A1 aufgrund ihrer Anfrage DNID der Endpunkt des gesuchten Pfades in Form der Funkstation C1 bereits bekannt ist, wird der Funkstation C1 durch die Nachricht RDST von der Basisstation BSC eine Identifikationsinformation der Funkstation A1 mitgeteilt, welche für die Funkstation C1 der Endpunkt des zu ermittelnden Pfades darstellt.

Daraufhin sendet die Funkstation A1 eine Nachricht RREQ (Route Request) aus. Diese Nachricht RREQ wird per Rundsenderuf ausgestrahlt, so dass alle Funkstationen in der Nachbarschaft der Funkstation A1 durch diese Nachricht RREQ adressiert sind. Die Nachricht RREQ, welche von der Funkstation A1 ausgestrahlt wird, enthält Informationen darüber, dass ein Pfad zwischen der Funkstation A1 und der Funkstation C1 gesucht wird. Eine ähnliche Nachricht RREQ wird auch von der Funkstation C1 ausgestrahlt, diese informiert die Funkstationen darüber, dass ein Pfad zwischen der Funkstation C1 und der Funkstation A1 ermittelt werden soll.

Eine Nachricht RREQ kann enthalten eine Identifikationsnummer der Pfadermittlung, Informationen über eine maximale Anzahl von Funkstationen, welche der zu ermittelnde Pfad beinhalten darf und ein Feld, welches die Anzahl der Weiterleitungen der Nachricht RREQ anzeigt, sowie eine Identifikationsinformation der ersten und der zweiten Funkstation.

Alle Funkstationen, welche eine entsprechende Nachricht RREQ empfangen, entnehmen der Nachricht die Aufforderung, diese Nachricht RREQ per Rundsenderuf weiterzuleiten. Vor der Weiterleitung der Nachricht RREQ wird durch die die Nachricht RREQ empfangende und weiterleitende Funkstation eine Identifikationsinformation derselben Funkstation an die Nachricht RREQ angehängt. Weiterhin erhöht die Funkstation vor der Weiterleitung der Nachricht RREQ das Feld mit der Anzahl der Weiterleitungen um den Wert eins. Erreicht die Anzahl der Weiterleitungen die maximale Anzahl von Funkstationen, welche der zu ermittelnde Pfad beinhalten darf - abzüglich der ersten und der zweiten Funkstation -, so verwirft die Funkstation die Nachricht RREQ und leitet diese nicht weiter.

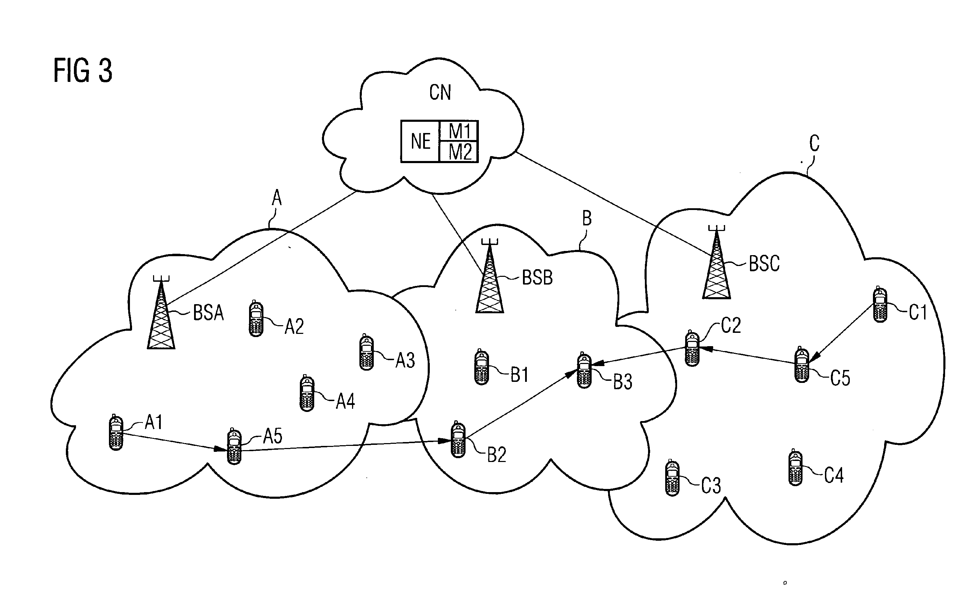

In Figur 3 ist zu erkennen, dass sich die Funkstation A5 in der Nachbarschaft der Funkstation A1 befindet. Somit empfängt die Funkstation A5 die Nachricht RREQ der Funkstation A1. Nach dem Empfang der Nachricht RREQ hängt die Funkstation A5 ihre Identifikationsinformation an die Nachricht RREQ und sendet die derart modifizierte Nachricht RREQ per Rundsenderuf aus. Die Funkstation A1 empfängt im Folgenden aufgrund ihrer Nachbarschaft zu der Funkstation A5 die Nachricht RREQ, welche von der Funkstation A5 ausgestrahlt wird. Sie erkennt jedoch an der Nachricht RREQ, dass sie diese bereits selber versendet hat, und leitet die Nachricht RREQ somit nicht erneut weiter. Jede Funkstation, welche eine Nachricht RREQ empfängt, überprüft weiterhin, ob sie den gesuchten Pfad durch das Funkkommunikationssystem in einem Speicher gespeichert hat. Würde zum Beispiel die Funkstation A5 erkennen, dass sie einen Pfad zwischen der Funkstation A1 und der Funkstation C1 kennt, so würde sie keine Nachricht RREQ aussenden, sondern der Funkstation A1 eine Nachricht, welche den gesuchten Pfad beinhaltet, senden.

Entsprechend empfängt auch die Funkstation C5 eine Nachricht RREQ von der Funkstation C1, welche ihr anzeigt, dass ein Pfad zwischen der Funkstation C1 und der Funkstation A1 ermittelt wird. Die Funkstation C5 prüft daraufhin, ob ihr eventuell aus einem Speicher ein solcher Pfad bekannt ist. Ist dies nicht der Fall, so sendet sie eine Nachricht RREQ per Rundsenderuf aus, nachdem sie ihre Identifikationsinformation dieser beigefügt hat.

Das generelle Vorgehen zur Ermittlung eines Pfades ist dementsprechend das folgende: die beiden Funkstationen A1 und C1 stoßen das Verfahren an, indem sie jeweils eine Nachricht RREQ per Rundsenderuf senden. Diese Nachricht RREQ enthält die Mitteilung, dass ein Pfad zwischen den Funkstationen A1 und C1 gesucht wird. Jede benachbarte Funkstation dieser beiden Funkstationen A1 und C1, welche die Nachricht RREQ empfangen, prüfen daraufhin, ob ihnen ein solcher Pfad bekannt ist. Eine derartige Prüfung kann bei mobilen Funkkommunikationssystemen auch entfallen. Weiterhin prüft jede Funkstation, welche eine Nachricht RREQ erhalten hat, gegebenenfalls unter Verwendung einer Identifikationsnummer der Ermittlung des Pfades, ob sie diese Nachricht bereits zu einem früheren Zeitpunkt erhalten hat. Ist dies gegeben, so reagiert diese Funkstation nicht auf die Nachricht RREQ. Hat eine Funkstation eine derartige Nachricht RREQ jedoch nicht zu einem früheren Zeitpunkt erhalten, so hängt sie ihre Identifikationsinformation an die Nachricht RREQ und sendet die derart modifizierte Nachricht RREQ ebenso per Rundsenderuf aus. Weiterhin kann bei Verwendung einer maximalen Anzahl an Funkstationen pro Pfad auch der entsprechende Zähler von der Funkstation erhöht werden.

Da die Nachricht RREQ sowohl von der Funkstation A1 als auch von der Funkstation C1 gesandt wurde, erreichen Funkstationen sowohl Nachrichten RREQ von seitens der Funkstation A1, durch welche nach einem Pfad zwischen der Funkstation A1 und der Funkstation C1 gesucht wird, als auch Nachrichten RREQ von seitens der Funkstation C1, durch welche nach einem Pfad zwischen der Funkstation C1 und der Funkstation A1 gesucht wird. In Figur 3 ist der Fall dargestellt, dass diese Situation zuerst auf die Funkstation B3 zutrifft. Die Funkstation B3 hat somit eine Nachricht RREQ von der Funkstation B2 erhalten, an welcher sie erkennt, dass ein Pfad zwischen der Funkstation A1 und der Funkstation C1 gesucht wird, sowie eine Nachricht RREQ von der Funkstation C2, an welcher zu erkennen ist, dass ein Pfad zwischen der Funkstation C1 und Funkstation A1 gesucht wird. Anhand der Inhalte dieser beiden Nachrichten RREQ erkennt die Funkstation B3, dass diese beiden Nachrichten RREQ sich auf denselben zu ermittelnden Pfad beziehen. Die Nachricht RREQ von der Funkstation B2 enthält Identifikationsinformationen über die Funkstationen A1, A5 und B2. Demgemäss enthält die Nachricht RREQ von der Funkstation C2 Identifikationsinformationen über die Funkstation C1, C5 und C2. Somit ist der Funkstation B3 nach dem Empfang der beiden Nachrichten RREQ ein Pfad zwischen den Funkstationen A1 und C1 bekannt. Wie in Figur 2 zu erkennen ist, sendet daraufhin die Funkstation B3 eine Nachricht RREP (Route Reply) an die Funkstationen C2 und B2. Diese Nachrichten RREP werden nicht per Rundsenderuf versendet, sondern unter Verwendung eines Einzelsenderuf. Hierzu setzt die Funkstation B3 die Kenntnis des Pfades zwischen den Funkstationen A1 und C1 ein. Die Nachrichten RREP enthalten Informationen über den Pfad zwischen den Funkstationen A1 und C1. Diese Informationen werden von den Funkstationen gemäß der Reihenfolge des Pfades zwischen den Funkstationen A1 und C1 bis zu der Sendefunkstation A1 und bis der Empfangsstation C1 weitergeleitet. Hierbei kann der zur Weiterleitung zu verwendende Pfad in einen Kopfteil der Nachrichten RREP eingefügt sein. Die Funkstation B2 erkennt dann zum Beispiel, dass nach ihrer Identifikationsinformation die Identifikationsinformation der Funkstation A5 folgt, so dass sie eine Nachricht RREP an die Funkstation A5 sendet.

Die Informationen über den Pfad zwischen der Funkstation A1 und der Funkstation C1, welche die Funkstation B3 unter Verwendung der Nachrichten RREP aussendet, können auch lediglich an die Funkstation A1 zurückgesendet werden. In diesem Fall hat die Funkstation C1, die zwar das Verfahren zur Ermittlung des Pfades angestoßen hat, keine Kenntnis von dem ermittelten Pfad zwischen den Funkstationen A1 und C1. Da jedoch die Funkstation A1 Informationen INFO zu der Funkstation C1 versenden will, reicht es aus, wenn nur diese den ermittelten Pfad zwischen den Funkstationen A1 und C1 kennt. Es ist auch möglich, dass die Informationen über den Pfad, welchen die Funkstation B3 mittels der Nachrichten RREP ausstrahlt, nur einen Teil des Pfades betreffen. So kann die Funkstation B3 ausschließlich den Teilpfad zwischen der Funkstation A1 und der Funkstation B3 an die Funkstation A1 übermitteln. Zur Versendung der Informationen INFO von der Funkstation A1 zu der Funkstation C1 versendet die Funkstation A1 dann zuerst über den ihr bekannten Teilpfad, woraufhin die Funkstation B3 für den zweiten Teil des Pfades zwischen der Funkstation B3 und der Funkstation C1 den entsprechenden Teilpfad in den Header der Informationen einfügt.

In der Regel werden unter Verwendung des erfindungsgemäßen Verfahrens mehrere Pfade durch das Funkkommunikationssystem ermittelt. Dies führt dazu, dass der Funkstation A1 mehrere Pfade zur Versendung der Informationen INFO an die Funkstation C1 zur Verfügung stehen. Die Funkstation A1 kann dann eine geeignete Auswahl aus diesen Pfaden treffen, um die Informationen INFO an die Funkstation C1 zu versenden, oder sie kann mehrere Pfade zur Versendung der Informationen INFO an die Funkstation C1 verwenden.

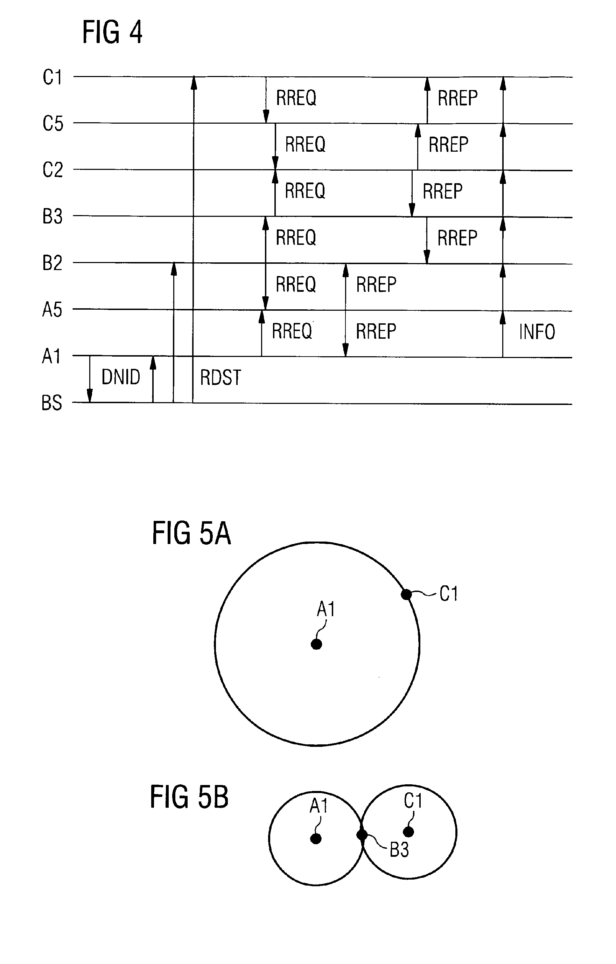

Im bisher beschriebenen Verfahren handelt es sich bei den beiden Funkstationen A1 und C1, welche das Verfahren zur Ermittlung des Pfades durch die Versendung einer Nachricht RREQ anstoßen, um die die Information zuerst sendende und die die Information letztendlich empfangende Funkstation. Bei dem Pfad zwischen diesen beiden Funkstationen handelt es sich somit um den Gesamtpfad, über den die Informationen zu versenden sind. Es ist jedoch auch möglich, dass der zu ermittelnde Pfad nur ein Teilpfad eines Gesamtpfades, über den Informationen versendet werden sollen, darstellt. Dies kann dadurch realisiert werden, dass die netzseitige Einrichtung mehrere Funkstationen anweist, eine entsprechende Nachricht RREQ zur Ermittlung eines Pfades durch das Funkkommunikationssystem auszusenden. In Figur 4 ist der Fall dargestellt, dass die netzseitige Einrichtung NE der Figur 1 nach Empfang einer Nachricht DNID von der Funkstation A1 den Funkstationen A1, B2 und C1 eine Nachricht RDST sendet. Diese Versendung erfolgt für die Funkstation A1 unter Verwendung der Basisstation BSA, für die Funkstation B2 unter Verwendung der Basisstation BSB und für die Funkstation C1 unter Verwendung der Basisstation BSC. In den Nachrichten RDST werden die adressierten Funkstationen aufgefordert, Nachrichten RREQ zur Ermittlung eines Pfades durch das Funkkommunikationssystems per Rundsenderuf auszustrahlen. Die Nachricht RDST an die Funkstation A1 beinhaltet die Anweisung, einen Pfad zwischen der Funkstation A1 und der Funkstation B2 zu ermitteln. Die Anweisung RDST an die Funkstation B2 enthält die Anweisung, sowohl einen Pfad zwischen der Funkstation B2 und der Funkstation A1, als auch einen Pfad zwischen der Funkstation B2 und der Funkstation C1 zu ermitteln. Entsprechend beinhaltet die Nachricht RDST an die Funkstation C1 die Anweisung, einen Pfad zwischen der Funkstation C1 und der Funkstation B2 zu ermitteln. Diese jeweiligen Informationen sind dann von den Funkstationen A1, B2 und C1 den von ihnen ausgestrahlten Nachrichten RREQ beizufügen.

Die Funkstationen A1, B2 und C1 werden von der netzseitigen Einrichtung NE unter Verwendung von Mitteln M1 zur Auswahl von Funkstationen ausgewählt. Hierzu ist es vorteilhaft, dass die netzseitige Einrichtung NE die aktuelle Topologie, d.h. die Nachbarschaftsbeziehung zwischen den verschiedenen Funkstationen, kennt. Ein Verfahren zur Ermittlung der Topologie des Netzwerkes kann zum Beispiel folgendermaßen aussehen: jede Funkstation sendet in regelmäßigen Zeitabständen ein Broadcast Signal, in welchen es die jeweiligen Nachbarfunkstationen auffordert, eine Antwort zu senden. Nach Empfang einer derartigen Antwort von ihrer oder ihren benachbarten Funkstationen ist der entsprechenden Funkstation bekannt, welche Funkstationen sich in ihrer Nachbarschaft aktuell befinden. Diese Informationen sendet die Funkstation dann über die entsprechende Basisstation an die netzseitige Einrichtung NE. Führen alle Funkstationen des Funkkommunikationssystems ein derartiges Verfahren zur Ermittlung der aktuellen Topologie des Netzwerkes durch, so ist der netzseitigen Einrichtung NE die gesamte Topologie des Netzwerkes bekannt. Vorteilhafterweise wird das Verfahren mehrmals, so z.B. zu periodisch wiederkehrenden Zeitpunkten, durchgeführt, um der Mobilität und der Verfügbarkeit von Funkstationen Rechnung zu tragen. Diese Topologie kann in der netzseitigen Einrichtung NE unter Verwendung von Mitteln M2 zur Speicherung von Nachbarschaftsbeziehungen gespeichert werden.

In Figur 4 ist zu erkennen, dass die Funkstationen A1, B2 und C1 nach Empfang der Nachricht RDST jeweils eine Nachricht RREQ zur Ermittlung des entsprechenden Pfades aussenden. Das Verfahren zur Ermittlung der Teilpfade zwischen den Funkstationen A1 und B2, sowie zwischen den Funkstationen B2 und C1 verläuft analog zur obigen Beschreibung der Ermittlung des Pfades zwischen den Funkstationen A1 und B1. Gemäß Figur 4 hat die Funkstation A5 sowohl eine Nachricht zur Ermittlung des Pfades zwischen den Funkstationen A1 und B2 von der Funkstation A1, als auch von Funkstation B2 empfangen. Daraufhin sendet sie eine entsprechende Mitteilung RREP mit Informationen über den ermittelten Pfad an die Funkstationen A1 und B2. Für diese Versendung der Informationen über den Pfad mittels der Nachricht RREP gilt die Beschreibung bezüglich dieses Signals RREP gemäß obiger Ausführung entsprechend. Auch die Funkstation C2 hat sowohl ein Signal von seitens der Funkstation C1 zur Ermittlung eines Pfades zwischen den Funkstationen C1 und B2 empfangen, als auch eine Nachricht RREQ von seitens der Funkstation B2 zur Ermittlung eines Pfades zwischen den Funkstationen B2 und C1. Daraufhin sendet sie Informationen über den ermittelten Pfad zwischen den Funkstationen B2 und C1 unter Verwendung der Kenntnis dieses Pfades per Einzelsenderuf über die Funkstationen C5 und B3 an die Funkstationen B2 und C1 zurück. Die Funkstation B2 kann diese Informationen über den Pfad weiterhin an die Funkstation A1 weiterleiten. Die Versendung von Informationen von der Funkstation A1 zur Funkstation C1 ist jedoch auch ohne diese Weiterleitung des Teilpfades an die Funkstation A1 möglich.

Schließlich kann die Funkstation A1 die Informationen INFO unter Kenntnis des Pfades über die Funkstationen A5, B2, B3, C2 und C5 an die Funkstation C1 versenden. Auch bei diesem Vorgehen ist es möglich, dass mehrere Pfade zwischen der Funkstation A1 und der Funkstation C1 ermittelt werden. Jeder dieser Pfade beinhaltet jedoch die Funkstation B2. Diese Tatsache erweist sich jedoch dann als problematisch, wenn die Funkstation B2 zur Weiterleitung der Informationen INFO ausfällt. Um eine derartiges Ausfallrisiko zu verringern, kann die netzseitige Einrichtung NE mehrere Funkstationen zwischen der sendenden Funkstation A1 und der empfangenden Funkstation C1 zur Aussendung einer Nachricht RREQ zur Ermittlung eines Pfades auffordern. So könnte zum Beispiel eine Nachricht RDST mit der Aufforderung zur Aussendung einer Nachricht RREQ außer an die Funkstationen A1, B2 und C1 auch an die Funkstation B1 ergehen. Die Funkstation B1 würde dann mit der Nachricht RDST angewiesen, einen Pfad zwischen der Funkstation B1 und der Funkstation A1 zu ermitteln, sowie einen Pfad zwischen der Funkstation B1 und Funkstation C1 zu ermitteln.

Weiterhin würde die Funkstation A1 mit der Nachricht RDST angewiesen, einen Pfad zwischen der Funkstation A1 und der Funkstation B2, als auch ein Pfad zwischen der Funkstation A1 und der Funkstation B1 zu ermitteln. Entsprechend würde die Funkstation C1 aufgefordert, einen Pfad zwischen der Funkstation C1 und der Funkstation B2, als auch einen Pfad zwischen der Funkstation C1 und der Funkstation B1 zu ermitteln. In diesem Fall würden also mindestens zwei Pfade durch das Funkkommunikationssystem ermittelt werden, wobei mindestens ein Pfad die Funkstation B2 enthält und mindestens ein weiterer Pfad die Funkstation B1 enthält.

Es ist auch möglich, dass eine Basisstation von der netzseitigen Einrichtung aufgefordert wird, eine Nachricht zur Ermittlung eines Teilpfades zu versenden. In diesem Fall kann die betroffene Basisstation die ihr übermittelte Information über Teilpfade an die netzseitige Einrichtung senden. Diese kann die betreffenden Information an die Funkstation A1 über die Basisstation BSA übermitteln oder diese ausschließlich zur Aktualisierung von in der netzseitigen Einrichtung gespeicherten Verfügbarkeiten von Funkstationen innerhalb des Funkkommunikationssystems verwenden.

Das beschriebene erfindungsgemäße Verfahren weist den Vorteil auf, dass die Anzahl an Signalisierungsnachrichten zur Ermittlung eines Pfades durch das Funkkommunikationssystem im Vergleich zu herkömmlichen nicht bidirektionellen Verfahren deutlich reduziert werden kann. Dies ist schematisch in den Figuren 5a und 5b veranschaulicht. Würde ausschließlich die Funkstation A1 beginnen, Nachrichten zur Ermittlung eines Pfades zur Funkstation C1 per Rundsenderuf auszusenden, so stellt der Kreis der Figur 5a den Bereich des Funkkommunikationssystem dar, innerhalb welchem von den Funkstationen des Funkkommunikationssystems Nachrichten per Rundsenderuf zur Ermittlung eines Pfades ausgesendet werden müssten. Senden hingegen sowohl die Funkstation A1, als die Funkstation C1 gemäß dem erfindungsgemäßen Verfahren eine derartige Nachricht zur Ermittlung eines Pfades durch das Funkkommunikationssystem aus, so ist in Figur 5b durch die Fläche der beiden Kreise gezeigt, innerhalb welcher Bereiche des Funkkommunikationssystems entsprechende Nachrichten zur Ermittlung eines Pfades von den Funkstationen ausgesendet werden müssen. Es ist durch Vergleich der Figuren 5a und 5b zu erkennen; dass die Anzahl an Signalisierungsnachrichten durch ein bidirektionelles Vorgehen zur Ermittlung eines Pfades durch das Funkkommunikationssystem deutlich reduziert wird.

Ein weiterer Vorteil ist darin zu sehen, dass der Pfad zwischen der Sendefunkstation und der Empfangsfunkstation bei Verwendung des erfindungsgemäßen Verfahrens schneller gefunden werden kann als bei herkömmlichen Verfahren zur Ermittlung eines Pfades. Dies führt dazu, dass die Verbindung zwischen der sendenden und der empfangenden Funkstation innerhalb einer kürzeren Zeitspanne aufgebaut werden kann.

Das erfindungsgemäße Verfahren kann für verschiedenartigste Größen von Funkkommunikationssystemen eingesetzt werden, somit liegt Skalierbarkeit vor. Das Verfahren ist verwendbar innerhalb einer einzigen Funkzelle oder auch, wie in Figur 3 gezeigt, für eine Mehrzahl von Funkzellen. Je größer das betrachtete Funkkommunikationssystem ist, und je weiter der räumliche Abstand zwischen der sendenden und der empfangenden Funkstation wird, desto mehr Funkstationen sollten eine Anweisung von der netzseitigen Einrichtung empfangen, ein Verfahren zur Ermittlung eines Pfades durch das Funkkommunikationssystem durch die Aussendung geeigneter Nachrichten anzustoßen.

## Patentansprüche

1. Verfahren zur Ermittlung eines Pfades in einem Funkkommunikationssystem mit einer Vielzahl von zumindest teilweise mobilen Funkstationen (BSA, BSB, BSC, A1, A2, A3, A4, A5, B1, B2, B3, C1, C2, C3, C4, C5),
wobei eine Funkstation, welche sich in einem Funkabdeckungsbereich einer anderen Funkstation befindet, eine benachbarte Funkstation zu der anderen Funkstation darstellt,
wobei im Funkkommunikationssystem von einer ersten Funkstation (A1) als Sendefunkstation zu einer zweiten Funkstation (C1) als Empfangsfunkstation Informationen (INFO) direkt oder über eine oder mehrere andere die Informationen (INFO) empfangende und weiterleitende Funkstationen (A5, B2, B3, C2, C5) über mindestens einen Pfad übertragbar sind,
wobei ein Pfad zwischen der ersten (A1) und der zweiten (C1) Funkstation aus einer Reihenfolge von Funkstationen (A1, A5, B2, B3, C2, C5, C1) besteht, welche außer der ersten Funkstation (A1) und der zweiten Funkstation (C1) gegebenenfalls die in der Reihenfolge dazwischenliegenden die Informationen (INFO) empfangenden und weiterleitenden Funkstationen (A5, B2, B3, C2, C5) beinhaltet,
**dadurch gekennzeichnet,**
**dass** zur Ermittlung von mindestens einem Pfad zwischen der ersten (A1) und der zweiten (C1) Funkstation sowohl die erste (A1) als auch die zweite (C1) Funkstation jeweils an ihre benachbarte oder benachbarten Funkstationen (A5, C5) eine Nachricht (RREQ) mit Identifikationsinformation von der jeweils anderen Funkstation (A1, C1) sendet.

2. Verfahren nach Anspruch 1, **dadurch gekennzeichnet,**
**dass** die erste (A1) und die zweite (C1) Funkstation zur Versendung der jeweiligen Nachricht (RREQ) von einer netzseitigen Einrichtung (NE) des Funkkommunikationssystems aufgefordert werden.

3. Verfahren nach Anspruch 2, **dadurch gekennzeichnet,**
**dass** die erste Funkstation (A1) vor der Aufforderung
- die netzseitige Einrichtung (NE) über eine zukünftige Übermittlung von Informationen (INFO) von der ersten zu der zweiten Funkstation (C1) informiert oder
- Informationen über mindestens einen Pfad zwischen der ersten (A1) und der zweiten (C1) Funkstation von der netzseitigen Einrichtung (NE) anfordert.

4. Verfahren nach einem der Ansprüche 1 bis 3, **dadurch gekennzeichnet,**
**dass** die benachbarte oder die benachbarten Funkstationen (A5, C5), welche die jeweilige Nachricht (RREQ) empfangen haben, an ihre jeweilige benachbarte oder benachbarten Funkstationen (B2, C2) die jeweilige Nachricht (RREQ) nach Hinzufügen von Identifikationsinformationen weiterleiten.

5. Verfahren nach einem Anspruch 4, **dadurch gekennzeichnet,**
**dass** mindestens eine Funkstation (B3), welche
- sowohl eine Nachricht (RREQ) gegebenenfalls mit von einer oder mehreren Funkstationen (A5, B2) hinzugefügten Identifikationsinformationen von der ersten Funkstation (A1)
- als auch eine Nachricht (RREQ) gegebenenfalls mit von einer oder mehreren Funkstationen (C5, C2) hinzugefügten Identifikationsinformationen von der zweiten Funkstation (C1)
empfangen hat,
Informationen über einen Pfad zwischen der ersten (A1) und der zweiten (C1) Funkstation an die erste (A1) und/oder die zweite (C1) Funkstation überträgt gegebenenfalls über eine oder mehrere weitere Funkstation (B2, A5, C2, C5) unter Verwendung der Informationen über den Pfad.

6. Verfahren nach einem der Ansprüche 1 bis 5, **dadurch gekennzeichnet,**
**dass** der zu ermittelnde mindestens eine Pfad zwischen der ersten (A1) und der zweiten (C1) Funkstation
- einen Teil eines Gesamtpfades zwischen der ersten Funkstation (A1) als Sendefunkstation und einer anderen als der zweiten Funkstation (C1) als Empfangsfunkstation oder
- einen Teil eines Gesamtpfades zwischen einer anderen als der ersten Funkstation (A1) als Sendefunkstation und der zweiten Funkstation (C1) als Empfangsfunkstation oder
- einen Teil eines Gesamtpfades zwischen einer anderen als der ersten (A1) und der zweiten (C1) Funkstation und einer weiteren anderen als der ersten (A1) und der zweiten (C1) Funkstation
darstellt.

7. Netzseitige Einrichtung (NE) in einem Funkkommunikationssystem mit einer Vielzahl von zumindest teilweise mobilen Funkstationen (BSA, BSB, BSC, A1, A2, A3, A4, A5, B1, B2, B3, C1, C2, C3, C4, C5),
wobei eine Funkstation, welche sich in einem Funkabdeckungsbereich einer anderen Funkstation befindet, eine benachbarte Funkstation zu der anderen Funkstation darstellt,
wobei im Funkkommunikationssystem von einer ersten Funkstation (A1) als Sendefunkstation zu einer zweiten Funkstation (C1) als Empfangsfunkstation Informationen (INFO) direkt oder über eine oder mehrere andere die Informationen (INFO) empfangenden und weiterleitenden Funkstationen (A5, B2, B3, C2, C5) über mindestens einen Pfad übertragbar sind,
wobei ein Pfad zwischen der ersten (A1) und der zweiten (C1) Funkstation aus einer Reihenfolge von Funkstationen (A1, A5, B2, B3, C2, C5, C1) besteht, welche außer der ersten Funkstation (A1) und der zweiten Funkstation (C1) gegebenenfalls die in der Reihenfolge dazwischenliegenden die Informationen (INFO) empfangenden und weiterleitenden Funkstationen (A5, B2, B3, C2, C5) beinhaltet,
**dadurch gekennzeichnet,**
**dass** die netzseitige Einrichtung (NE) Mittel (M1) zum Auswählen von mindestens zwei Funkstationen (A1, C1; A1, B2, C1) aus mindestens einem Pfad zwischen der ersten (A1) und der zweiten (C1) Funkstation aufweist, welche zur Versendung von jeweils einer Nachricht (RREQ) zur Ermittlung des mindestens einen Pfades aufgefordert werden.

8. Netzseitige Einrichtung (NE) nach Anspruch 7, **dadurch gekennzeichnet,**
**dass** die netzseitige Einrichtung (NE) Mittel (M2) zum Speichern von Nachbarschaftsbeziehungen zwischen den Funkstationen (BSA, BSB, BSC, A1, A2, A3, A4, A5, B1, B2, B3, C1, C2, C3, C4, C5) des Funkkommunikationssystems aufweist.
